# EUROPEAN PATENT SPECIFICATION

(11) **EP 4 612 492 B1**
(45) Date of publication and mention of the grant of the patent: **26.08.2026**
(21) Application number: 23817580.6
(22) Date of filing: 31.10.2023
(51) Int. Cl.: G01N 27/447

(54) **GEL IMAGING DEVICES**
GELABBILDUNGSVORRICHTUNGEN
DISPOSITIFS D'IMAGERIE DE GELS

(30) Priority: 31.10.2022 US 202263421085 P
(43) Date of publication of application: 10.09.2025
(73) Proprietor: Pierce Biotechnology, Inc., Rockford, IL 61105 (US); Life Technologies Holdings Pte Limited, Singapore 739256 (SG)
(72) Inventor: NARAHARI, Janaki, Rockford, Illinois 61105 (US); HANEY, Paul, Rockford, Illinois 61105 (US); KILMER, Gregory, Rockford, Illinois 61105 (US); PERRY, Serina, Rockford, Illinois 61105 (US); MCBRIDE, Aaron, Rockford, Illinois 61105 (US); LAU, Soo Yong, Singapore 739256 (SG); CHAN, Chee Wai, Singapore 739256 (SG); LIM, Beng Heng, Singapore 739256 (SG); SU, Yu Soon, Singapore 739256 (SG); LEE, Wei Guang, Singapore 739256 (SG); TAY, Zhixiong, Singapore 739256 (SG)
(74) Representative: HGF
(86) International application number: PCT/US2023/036328
(87) International publication number: WO 2024/097144

(56) References cited:
- ES-B1- 2 144 374
- US-A1- 2004 036 036
- US-A1- 2006 030 026

## Description

### BACKGROUND

### Related Applications

This application claims priority of U.S. Provisional Application No. US63/421,085.

### Technical Field

This disclosure generally relates to devices used with imagers and more particularly to contrast trays and framing devices to improve imaging.

### Related Technology

Scientific laboratories conduct a wide variety of applications that require imaging and documentation. Some examples of these applications include fluorescent DNA gel imaging, fluorescent stained protein gel imaging, colorimetric stained gel imaging, chemiluminescent western blot imaging, fluorescent western blot imaging, and colony plate imaging. Each of these applications have different imaging conditions that are optimal. An application may require a broad spectrum of light or a narrow spectrum for illumination. An application may be imaging the production of light (fluorescence & chemiluminescence) or the blocking/adsorption of transmitted light. Imaging systems can become complex and costly due to the requirement of a wide variety of light sources, excitation filters, and emission filters. One way to simplify an imager is to use a specific lighting source for multiple applications. A type of lighting that is commonly used is green or blue-green LED based trans-illumination. This is because the wavelengths of light from a blue-green or green transilluminator support the excitation of a wide range of fluorescent dyes that can be used for fluorescent DNA and fluorescent protein gel imaging (examples dyes include EtBr (Ethidium Bromide), SYBR^{™} green, SYBR safe, or Sypro^{™} Ruby/Red). Blue-green or green trans-illumination also does not have the hazards of UV transilluminators that have historically been used for DNA gel imaging. As these applications are fluorescent in nature, a narrow spectrum of light is required to excite a dye molecule that then emits a shifted wavelength of light. The emission light is captured by a camera through an emission filter specific to that emitted light. This use of emission filters when imaging fluorescent samples such as DNA gels typically provides a strong contrasted image of bright signal on a black background as the emission filter allows only the light produced by the material of interest to enter the camera. However, this is not always the case as precast DNA gels are now commonplace that add features such as well markers, labels, pre-loaded dye fronts, and barcode regions to aid the user in their use. However, these markings and items often also cause a fluorescent signal that can interfere with imaging the samples of interest. As can lint, or other contaminates that may be present on the imager's sample tray. There is a need in the art to have means to reduce or eliminate these negative effects.

Colorimetric stained SDS-PAGE (sodium dodecyl sulfate-polyacrylamide gel electrophoresis) gels, in comparison, are historically imaged with a broad-spectrum white light. The transmitted light is what is captured by a camera system (with or without additional fdters) and the protein bands are visualized based on the contrast of the backlighting of the transilluminator light and the light absorbed by the dyes used to stain the protein in the gel. Green or blue-green transilluminators can be used for colorimetric stained protein gel imaging, but will produce an image with poor contrast for blue stained gels. This is because proteins stained with blue (Coomassie-like) stains do not absorb a significant amount of green or blue-green light. Coomassie-like stains appear blue to the eye as other colors of light are being absorbed. For this reason, protein bands that are stained blue will look flat and have poor definition when imaged with a green or blue-green light. If bands were stained red they would appear more intense. The difference in light absorption between different colors is why broad-spectrum white light is typically used for imaging colorimetric stains. Therefore, there is a need for contrasting trays optimized for colorimetric imaging for imaging systems utilizing green or blue-green illumination.
US2006/0030026 discloses a transilluminator having a light emitting diode (LED) array.

### BRIEF SUMMARY

The invention is defined in the appended claims.

In the invention, a contrast tray for use in an imager, comprises one or more light diffusing layers configured to shift at least some of an imaging light;-and one or more light filtering layers configured to filter out at least some of the imaging light. In some embodiments, the one or more diffusing layers are further configured to up-shift (or upconvert) at least some of the imaging light. In some embodiments, the one or more light filtering layers are further configured to shift, or to upshift (also referred to as upconvert) at least some of the non-filtered light.

The contrast tray is designed to hold a test sample or for a test sample to be placed thereon. Exemplary test samples include colorimetrically stained protein gels, colorimetrically stained cell culture plates and the like.

In the invention, a contrast tray comprises one or more light diffusing layers, and light converting layers configured to provide an even illuminated background, and to shift some of the light intensities and wave lengths that illuminate a sample (where this light spectrum will differ from the emission spectrum of the existing illumination source), and one or more light filtering layers configured to filter out at least some of the imaging light.

A contrast tray of the present disclosure comprises one or more layers that may provide multiple impacts including diffusion, and/or shifting, and/or upconverting (also referred to as up-shifting) of at least some of the imaging light, and further provide light filtering to filter out at least some of the imaging light.

A method is disclosed of operating an imager. The method comprises directing an imaging light through an embodiment of a contrast tray of the present disclosure that holds a sample or has a sample placed thereon. Exemplary samples include colorimetrically stained protein gels, colorimetrically stained cell culture plates and the like.

A method is disclosed of constructing a contrast tray. The method comprises providing one or more light diffusing layers configured to shift at least some of an imaging light, and optionally further configured to up-shift at least some of the imaging light, and providing one or more light filtering layers configured to filter out at least some of the imaging light, and optionally further configured to shift, or up-shift at least some of the non-filtered light. The method further comprises coupling, adhering, or bonding the one or more light diffusing layers to the one or more light filtering layers.

The disclosure comprises a framing device for an imager. A framing device comprises a mat having a flat portion configured to cover at least a portion of a light source of an imager, the mat further comprising one or more ridges extending from the flat portion and configured to restrain a test sample therein, and a removable top frame configured to direct the imaging light through the test sample and to mask (or block) regions of the test sample to eliminate unwanted signal therefrom, and further configured to couple to the one or more ridges and to restrain the test sample therebetween. Exemplary samples include fluorescently stained nucleic acid gels, such as E-Gels and the like.

The disclosure comprises a method of constructing a framing device for an imager. The method comprises providing a mat comprising one or more ridges configured to receive a test sample therein, and further comprising a flat portion configured to entirely cover a light source except for the portion within the one or more ridges. The method also includes providing a frame configured to couple to the one or more ridges and restrain the test sample therein, and further configured to direct the light source through the test sample while masking other areas of the sample.

The disclosure comprises a method of using a framing device in an imager. The method comprises directing a light source through a test sample held by a framing device. The framing device comprises a mat comprising one or more ridges configured to receive a test sample therein, and further comprising a flat portion configured to entirely cover a light source except for the portion within the one or more ridges; and a frame configured to couple to the one or more ridges and restrain the test sample therein, and further configured to direct the light source through the test sample. Exemplary samples include fluorescently stained nucleic acid gels, such as E-Gels and the like.

This summary is provided to introduce a selection of concepts in a simplified form that are further described below in the detailed description.

The foregoing has outlined rather broadly the features and technical advantages of the present disclosure in order that the detailed description of the embodiments that follows may be better understood. Additional features and advantages of the disclosure will be set forth in the description which follows, and in part will be obvious from the description, or may be learned by the practice of the disclosure. The features and advantages of the disclosure may be realized and obtained by means of the instruments and combinations particularly pointed out in the appended claims. These and other features of the present disclosure will become fully apparent from the following description and appended claims or may be learned by the practice of the disclosure as set forth hereinafter. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

In order to describe the manner in which the above recited and other advantages and features of the disclosure can be obtained, a more particular description of the disclosure briefly described above will be rendered by reference to specific embodiments thereof, which are illustrated in the appended drawings. It is appreciated that these drawings depict only typical embodiments of the disclosure and are not therefore to be considered to be limiting of its scope. The disclosure will be described and explained with additional specificity and detail through the use of the accompanying drawings in which:
FIG. 1 illustrates one embodiment of a contrast tray of the present disclosure shown in an exploded view;
FIG. 2A illustrates a perspective view of the contrast tray embodiment of FIG 1 of the present disclosure;
FIG. 2B illustrates another embodiment of a contrast tray of the disclosure;
FIG. 2C illustrates yet another embodiment of a contrast tray of the disclosure;
FIG. 3 illustrates artifacts such as Newton rings;
FIG. 4A and FIG. 4B illustrate an exemplary imager with an exemplary contrast tray embodiment of the present disclosure;
FIGS. 5A-5E illustrate test results as described *infra;*
FIG. 6 illustrates a flow chart of a method embodiment of the present disclosure;
FIG. 7 illustrates a flow chart of a method embodiment of the present disclosure;
FIG. 8 illustrates an exemplary imager with a framing device embodiment of the present disclosure;
FIGS. 9A-9B illustrate an exemplary imager with a framing device embodiment of the present disclosure;
FIGS. 10A-10B illustrate an exemplary imager with a framing device embodiment of the present disclosure;
FIGS. 10C-10D illustrate an exemplary user interface showing a framing device-based imaging embodiment of the present disclosure;
FIG. 11 illustrates a flow chart of a method embodiment of the present disclosure; and
FIG. 12 illustrates a flow chart of a method embodiment of the present disclosure.

### DETAILED DESCRIPTION

Before describing various embodiments of the present disclosure in detail, it is to be understood that this disclosure is not limited to the parameters of the particularly exemplified systems, methods, apparatus, products, processes, and/or kits, which may, of course, vary. Thus, while certain embodiments of the present disclosure will be described in detail, with reference to specific configurations, parameters, components, elements, etc., the descriptions are illustrative and are not to be construed as limiting the scope of the claimed invention. In addition, the terminology used herein is for the purpose of describing the embodiments and is not necessarily intended to limit the scope of the claimed invention.

The present disclosure describes devices for use with imagers and methods of using the devices in imagers. Some embodiments describe devices and methods comprising a contrast tray for use with imagers. In some embodiments, a contrast tray of the present disclosure comprises one or more layers that comprise one or more features such as diffusion, and/or shifting, and/or upconverting (also referred to as up-shifting) of at least some of the imaging light, and further provide light filtering to filter out at least some of the imaging light.

In the invention, a contrast tray for use in an imager, comprises one or more light diffusing layers configured to shift at least some of an imaging light;-and one or more light filtering layers configured to filter out at least some of the imaging light. In some embodiments, the one or more diffusing layers are further configured to up-shift (or upconvert) at least some of the imaging light. In some embodiments, the one or more light filtering layers are further configured to shift, or upshift (also referred to as upconvert) at least some of the non-filtered light.

In some exemplary embodiments, a contrast tray comprises one or more light diffusing layers configured to provide an even illumination pattern and shift the wavelength of at least some of an imaging light, and one or more light filtering layers configured to filter out at least some of the imaging light,. In some embodiments, the one or more diffusing layers are further configured to upconvert at least some of the imaging light. In some embodiments, the one or more light filtering layers are and further configured to upconvert at least some of the non-filtered light. The contrast tray can hold or receive a test sample, such as a gel.

Contrast tray embodiments provide superior imaging results and the ability to obtain improved contrasting of stained protein gels (or other test samples) when using green or blue/green light for illumination. Other embodiments of the disclosure describe a framing device that provides better illumination and lowers background fluorescence for gels such as nucleic acid gels.

One embodiment of the present disclosure includes a contrast tray design that provides better contrast than white background trays or white conversion screens when imaging blue stained protein gels when using a green or blue-green light transilluminator.

The contrast tray comprises one or more light diffusing layers and one or more light filtering layers. The light diffusing layers can be configured to shift at least some of an imaging light for example, up-shift at least some of the imaging light. The light filtering layers can be configured to filter out at least some of the imaging light and can be further configured to shift (for example up-shift) at least some of the non-filtered light.

Different contrast tray embodiments under the present disclosure can comprise a variety of additional or alternative components or characteristics. Certain embodiments can further comprise an adhesive layer bonding the one or more light diffusing layers to the one or more light filtering layers. Certain embodiments can further comprise a filter frame configured to couple to the one or more light filtering layers and to receive a test sample thereon. In some embodiments the light diffusing layers and light filtering layers can receive a test sample between them. The one or more light diffusing layers comprise one or more translucent yellow layers. In some embodiments, the one or more light filtering layers comprise one or more translucent orange layers.

In one embodiment, a contrast tray comprises a yellow-colored light diffusing layer and an orange-colored light filtering layer on top of (or distal to a light source) the yellow layer. This is because certain embodiments of the present disclosure can both shift the light wavelengths of a green or blue-green light sourced when they hit and interact with the yellow and orange plastic layer and also filters out excess green wavelengths with the orange plastic layer.

In another embodiment, a contrast tray comprises a yellow-colored light diffusing layer on top of an orange-colored light filtering layer (or distal to a light source).

Contrast tray embodiments under the present disclosure serve the purpose of further improving the performance and versatility of imagers that contain only a single narrow spectrum green transilluminator. It also helps to lower the production cost of instrumentation by using fewer and lower cost light sources. Contrast tray embodiments can be made out of commonly available PMMA (polymethyl methacrylate) plastic sheets which have a lower cost than classical conversion screens.

Embodiments of the present disclosure include a contrasting tray designed to provide an optimized surface on which to image gels such as PAGE (polyacrylamide gel electrophoresis) gels, SDS PAGE gels, and other imaging gels that have been stained with any of the common colorimetric stains as well as colorimetrically stained cell culture plates (*e.g.,* crystal violet stained), or other gels or substances that can be similarly imaged.

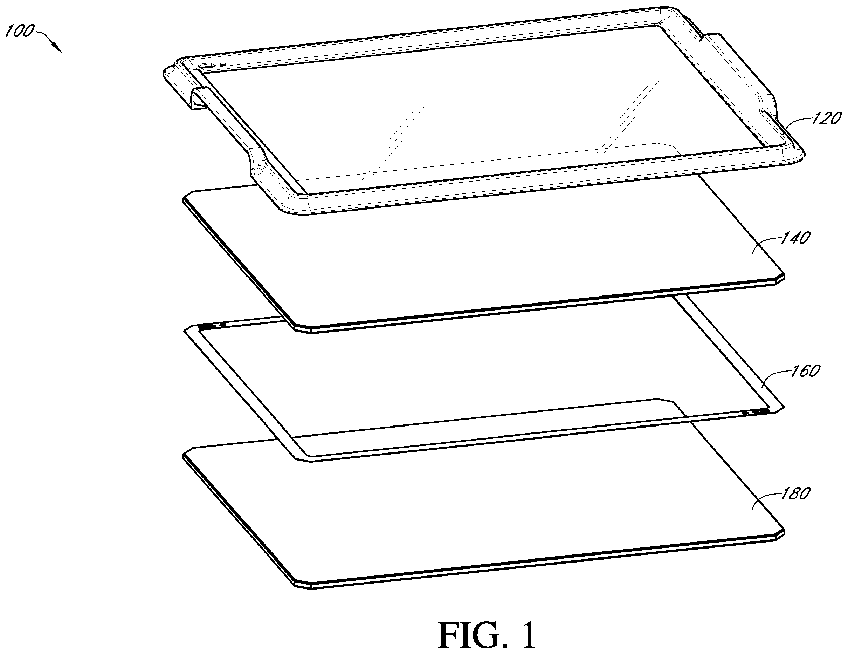

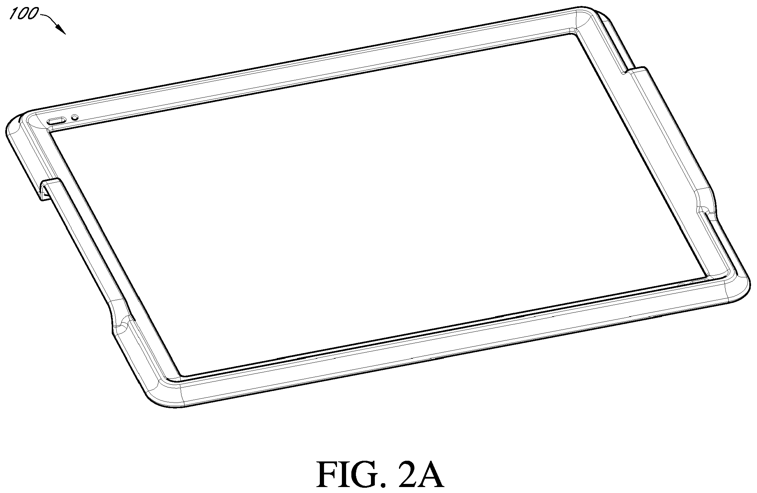

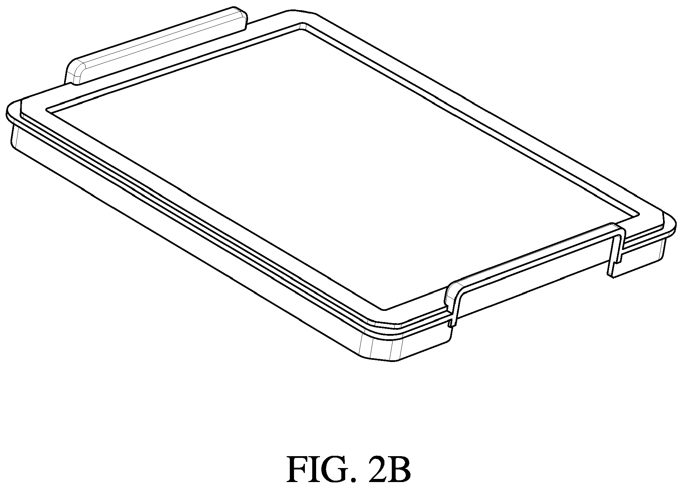

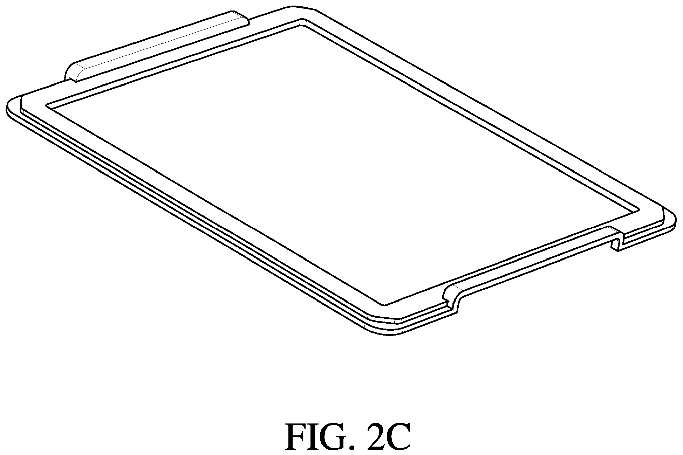

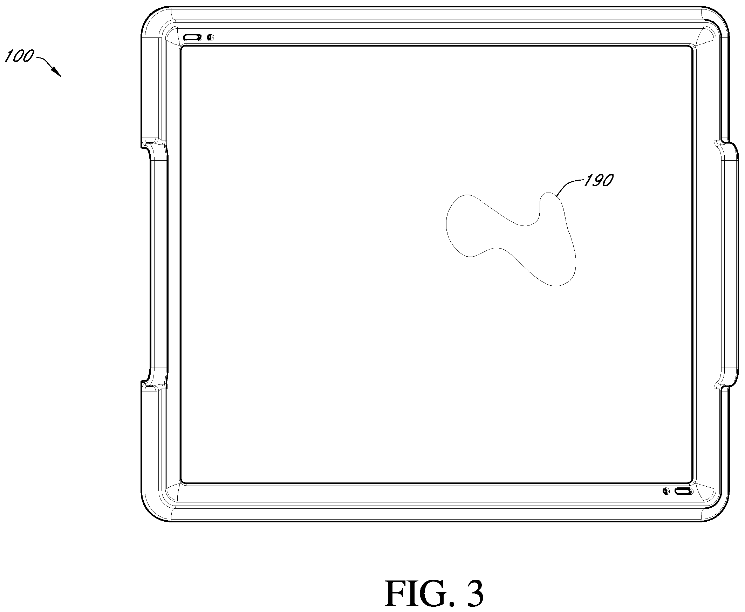

One embodiment of a contrast tray of the disclosure is shown in Figure 1 and Figure 2. Figure 1 gives an exploded view and Figure 2 a perspective view of the same embodiment. Contrast tray 100 comprises a filter frame 120 sitting on an orange layer 140 which is bonded to a yellow layer 180 via a bonding 160. A PAGE gel can be placed on top of the filter frame 120. Filter frame 120, orange layer 140, and yellow layer 180 can comprise, in a preferred embodiment, a polycarbonate/acrylonitrile butadiene styrene (PC-ABS). However, other materials can be used, such as plastics, certain types of glass, or other appropriate materials that can have the filtering, diffusing or upconverting properties. Orange layer 140 and yellow layer 180 are preferably at least partially translucent. Bonding 160 can comprise a tape or a variety of other adhesives, surface treatments, sprays, or other bonding methods. Improper bonding may lead to artifacts such as Newton rings when layers 140, 180 are adhered to each other with no or minimal gap. Surface treatments as described in the present disclosure can avoid Newton ring artifacts. Possible surface treatments include e.g., frosting, texturing, dye coating, dye spraying. The orange 140 and yellow layers 180 can be adhered directly on top of each other or have a gap between them (of from about 0.1 - 1mm). If adhered directly on top of each other the yellow layer 180 should preferably be treated with texturing or a spray coating (such as a UV-cured dye) to prevent the appearance of Newton ring artifacts. An example of a Newton ring 190 is shown in a contrast tray embodiment 100 in Figure 3.

Contrast tray 100 can improve imaging of colorimetric stained gels, especially in image systems that use green or blue-green based transillumination. This tray 100 is designed to help shift and filter the light from these narrow spectrum transilluminators to provide better lighting and contrast when imaging. Yellow layer 180 can function as a diffuser, upconverting green or blue-green light. Orange layer 140 filters out certain wavelengths.

There are numerous problems solved by embodiments of the present disclosure. One such problem is the issue of low contrast or differentially contrasted images when imaging is done of stained gels (or other gels) when using a green or blue-green transilluminator. Embodiments of the present disclosure can provide better contrast than trays that provide just a white background or light conversion screen that shifts only a portion of the transilluminator spectrum. Embodiments can also help reduce or eliminate any unwanted fluorescence from dyes that can be excited by green or blue-green light to produce any unwanted fluorescent signal. Such dyes are commonly found in protein molecular weight markers or sample loading buffers. Examples of dyes that can cause unwanted fluorescent signal when exposed to Green or blue light include but are not limited to dyes such as Remazol Brilliant Red, F3B, Remazol Brilliant, Orange 3R, and Remazol Golden Yellow and RNL.

If such dyes are present when imaging a PAGE gel with a green LED, those dyes can produce an emission light which can be higher in intensity than the back light from the transilluminator at a specific wavelength. If an emission filter is being used then this emission light can cause unwanted bright signal that compromises the image quality at exposure times that would be optimal for the visualization of the dark protein bands. Embodiments can reduce or eliminate this unwanted fluorescence by filtering out or converting a portion of the green LED wavelengths that induce this fluorescent signal.

Embodiments can also improve the performance and robustness of either the light filtering layer (e.g., orange) or the light diffusing layer (e.g., yellow). The orange layer 140 has higher chemical and stain resistance compared to the yellow layer 180. This makes clean up and washing of the tray between experiments simple and prevents contamination that can impact subsequent imaging experiments. The yellow layer 180 helps diffuse the light and protect the transparent layer which is prone to scratches which would glow from refraction of the transilluminator light if used individually.

To use the contrasting tray, the stained gel (or a stained cell culture plate) is place on the contrast tray 100, which is then placed on the imaging surface of an imaging system (or so as to receive light from) a transilluminator's light source below the imaging surface. Light is projected through the contrast tray 100 which shifts and filters the wavelengths of lights coming from the transilluminator's light sources before it hits the gel or plate. The light then passes through the stained gel (or plate). Embodiments below are described with respect to a gel however a cell culture plate can be used as well. The transmitted light is captured by a camera system (with or without any additional pre-camera filters) and the protein bands are visualized based on the contrast of the backlighting of the transilluminator and the light absorbed by the dyes used to stain the protein in the gel. Camera system is not expressly depicted in the drawings. This tray design provides better contrasting than white diffusion trays or white conversion screens when imaging stained protein gels when using a green or blue-green light transilluminator.

In some alternative embodiments under the present disclosure, the orange layer 140 and yellow layer 180 can "sandwich" the gel between them. This can also serve to achieve better results than the prior art. Having the light pass through the yellow layer 180, then a gel, then the orange layer 140, can still achieve desirable filtering, diffusing and upconverting of the light. These alternative embodiments are depicted in FIG. 2B and FIG. 2C respectively.

In some prior art, the material of the contrast tray is used as a filter after the object is imaged to prevent the excitation light from hitting the detector (but still excite the target object). Under the present disclosure, the contrast tray 100 is preferably used at least partially below the target (such as a PAGE gel) to filter out some of the light being used to illuminate the sample. As such, it is used to further minimize the amount of green light hitting (or illuminating) the target to create a better balance of the light hitting the target.

Variations of embodiments can utilize a variety of colors of plastics or translucence. Color and degree of translucence can be varied and altered depending on the wavelength range and intensity of the green or blue-green transilluminator or the emissions filters used along with the camera above the target.

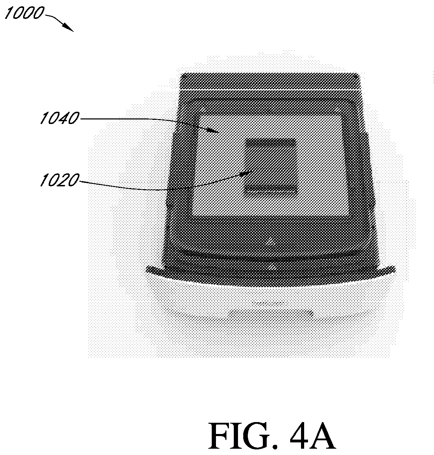

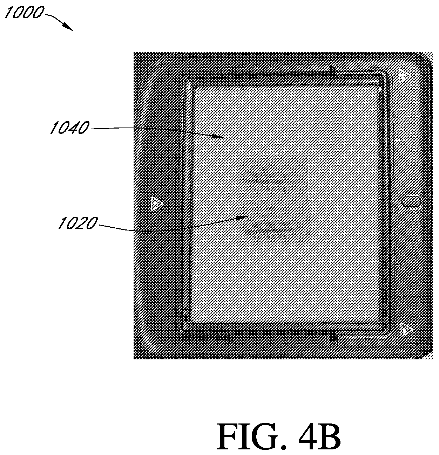

Figures 4A and 4B illustrate an alternative embodiment of a contrast tray 1040 on an imager 1000. In this embodiment, contrast tray 1040 is larger than the frame 1020 which may contain a gel to be imaged. An exemplary gel frame with a gel is shown in frame 1020 in FIG 4A and a gel with proteins is shown on frame 1020 in FIG. 4B (some parts of the imager are not shown in detail in FIG 4B). This embodiment helps to show that the contrast tray 1040 does not always have to be the same size as a gel to be illuminated.

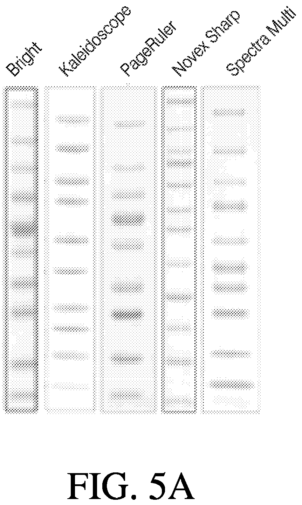

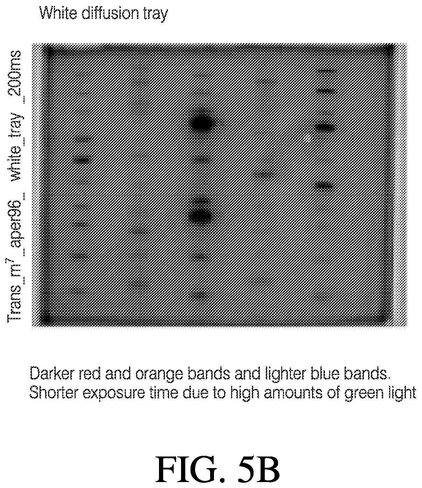

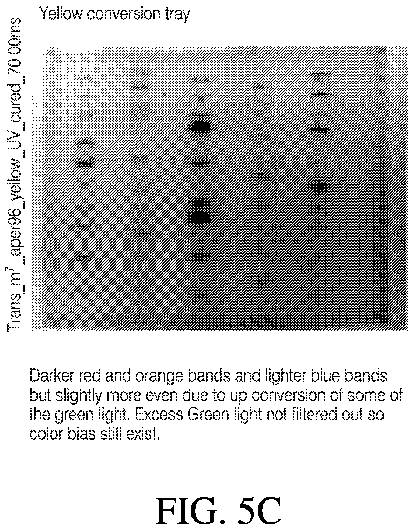

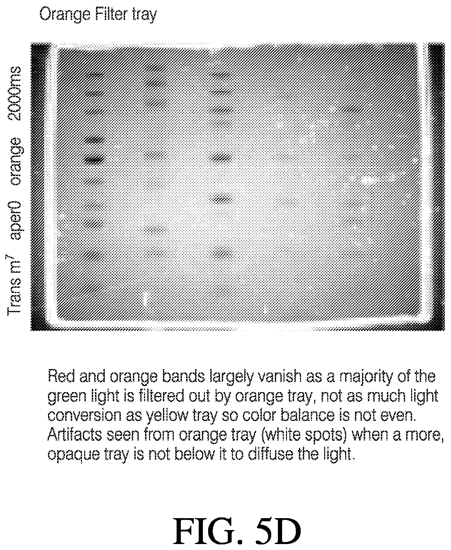

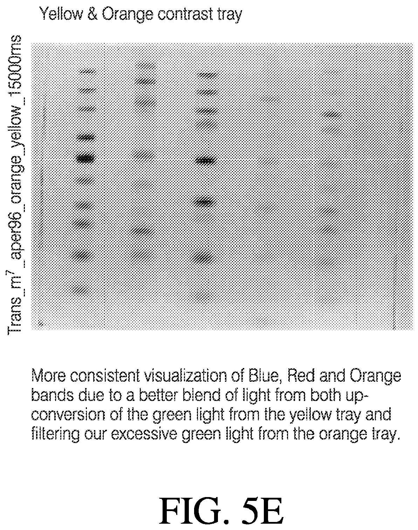

Figures 5A-5E illustrate test results with various types of trays. Applicant used an imager to analyze gel samples for the proteins identified by the chart shown in Figure 5A. The imaging results shown in Figure 5B are using a white diffusion tray (the prior art). The results in Figure 5C are from using a yellow conversion tray. The results in Figure 5D are from using an orange filter tray. The results in Figure 5E are from using a combination of yellow and orange in a contrast tray. As can be seen, results from Figures 5B-5E are all better than the prior art results shown in Figure 5A. The results in Figure 5E (combination of orange and yellow) yield the best results. In Figure 5B there are darker red and orange bands and lighter blue bands. Shorter exposure time is used due to high amounts of green light. Figure 5C features darker red and orange bands and lighter blue bands, but slightly more even due to up conversion of some of the green light. Excess green light is not filtered out so some color bias still exists. Figure 5D features red and orange bands that have mostly vanished because a majority of the green light is filtered out by the orange tray. Not as much light conversion as the yellow tray of Figure 5C, so color balance is not even. Artifacts (white splotches) are seen because an opaque tray is not below the orange filter to diffuse the light. Figure 5E features more consistent visualization of blue, red and orange bands due to a better blend of light from both up-conversion of the green light from the yellow tray and filtering out excessive green light from the orange tray.

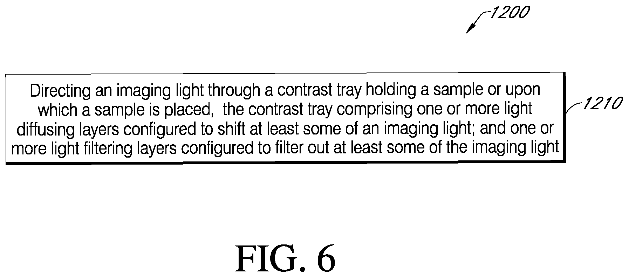

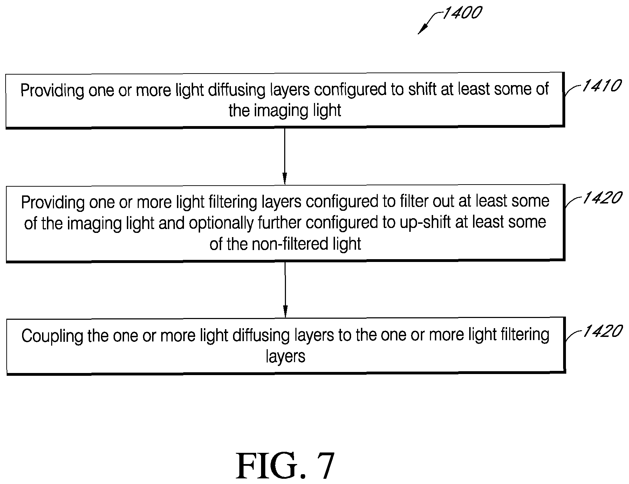

Figures 6 and 7 illustrate flow charts of several possible methods.

Figure 6 shows a method 1200 of operating an imager. Step 1210 is directing an imaging light through a contrast tray holding a sample, the contrast tray comprising: one or more light diffusing layers configured to shift at least some of the imaging light; and one or more light filtering layers configured to filter out at least some of the imaging light. Method 1200 can comprise a variety of alternative and/or additional steps. The contrast tray can comprise an adhesive layer bonding the one or more light diffusing layers to the one or more light filtering layers. It can also comprise a filter frame coupled to the one or more light filtering layers and configured to hold a test sample thereon. The one or more light diffusing layers can be configured to upshift at least some of the imaging light. The one or more light filtering layers can be configured to shift at least some of the filtered light. The one or more light diffusing layers can comprise one or more translucent yellow layers. The one or more light filtering layers can comprise one or more translucent orange layers. The one or more light diffusing layers can comprise at least one of: spray coating; texturing; UV-cured dye. The imaging light can comprise a green or blue-green light. The method can further comprise displaying an output from the one or more light filtering layers to a user. The method can comprise placing a test sample on the contrast tray before directing the imaging light. The test sample can comprise a gel or a cell culture plate stained colorimetrically.

Figure 7 illustrates a method 1400 of constructing a contrast tray. Step 1410 is providing one or more light diffusing layers configured to shift at least some of an imaging light. Step 1420 is providing one or more light filtering layers configured to filter out at least some of the imaging light. Step 1430 is coupling the one or more light diffusing layers to the one or more light filtering layers. Method 1400 can comprise a variety of alternative or additional steps, including the alternatives set forth with regard to method 1200. The contrast tray further can comprise at least one of: an adhesive layer coupling the one or more light diffusing layers to the one or more light filtering layers. The coupling can comprise using an adhesive, such as an adhesive tape. The method can comprise coupling a filter frame to the one or more light filtering layers.

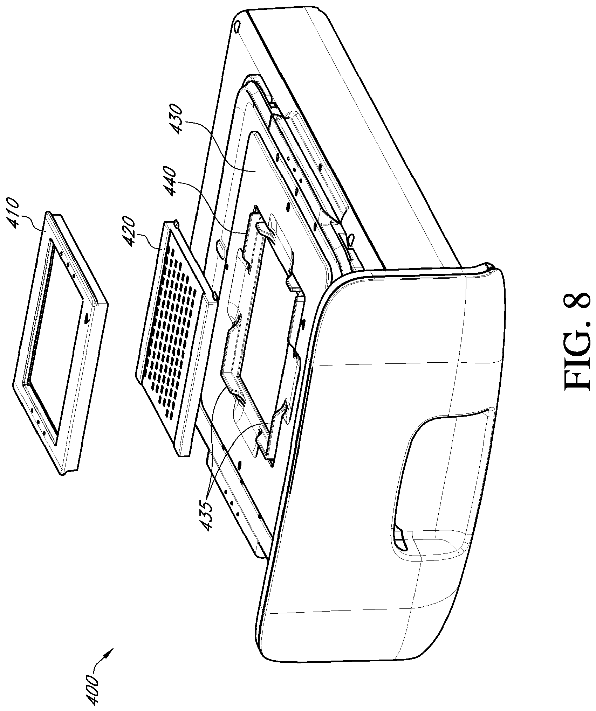

In some embodiments, although not claimed in the appended claims, the disclosure describes a framing device that provides better illumination and lowers background fluorescence for gels such as nucleic acid gels. Figures 8-12 depict some example of framing devices of the disclosure.

Figure 8 illustrates a non-limiting example of an imager 400 that may utilize a framing device to reduce, substantially reduce or remove excessive unwanted fluorescence from a sample, such as e.g., a fluorescent nucleic acid gel, an E-Gel agarose gels, and from objects such as fluorescent barcodes and labels on E-gels or others. The framing device embodiments under the present disclosure can be used or adapted to work with a variety of imagers or imaging machines. Imager 400 can comprise or use a light source 440 that can illuminate a test sample 420 (for example, a nucleic acid gel, such as an E-gel agarose gel, or other fluorescent nucleic acid gel, or other gel sample). Frame 410 can hold test sample 420 in place within ridges 435 (or other movement restricting means). Ridges 435 can comprise part of a mat 430. Mat 430 may comprise silicone, plastic, or another material. Mat 430 and frame 410 can help to limit light source 440 from bleeding out around the edges of frame 410 so that applied light only passes through test sample 420. Test sample 420 can be placed on a transilluminator tray such as described in various embodiments in the present disclosure. The combination of mat 430 and frame 410 can be referred to as a framing device under the present disclosure. Embodiments under the present disclosure can include imagers 400 or framing devices that can be retrofitted to existing imagers.

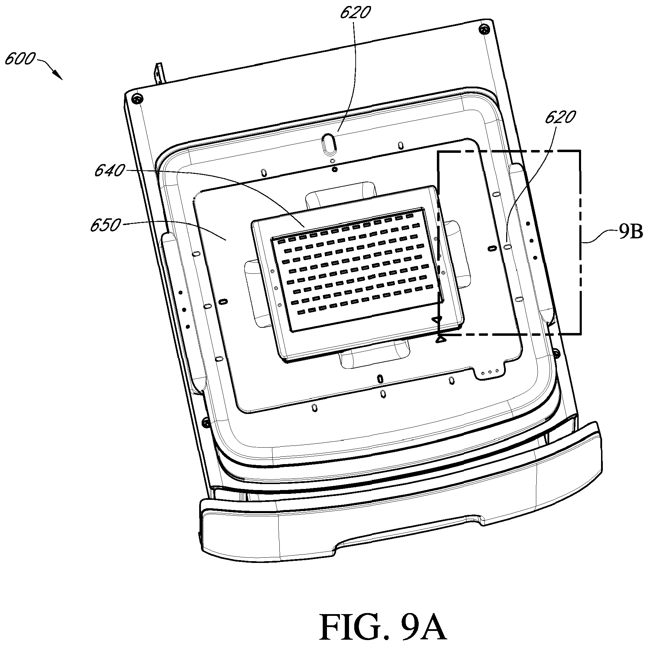

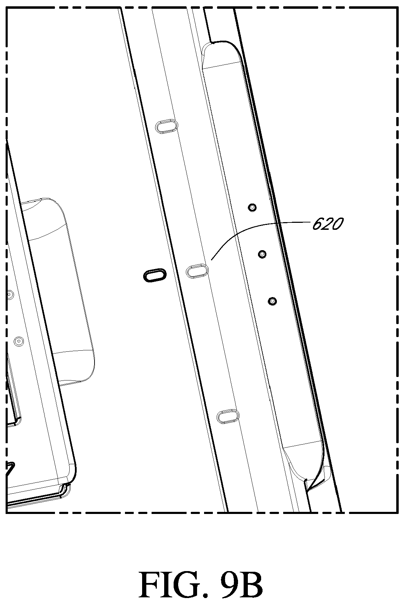

Figure 9A and 9B illustrates other aspects of an imager 600. In these figures the components of a framing device (frame 640, mat 650) are assembled together. Alignment markings 620 can assist a user in placing the mat 650 in the correct orientation within imager 600.

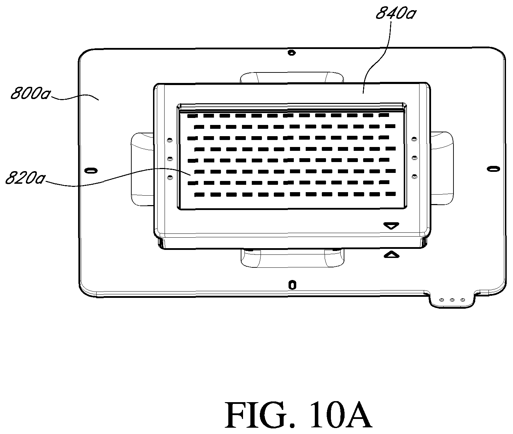

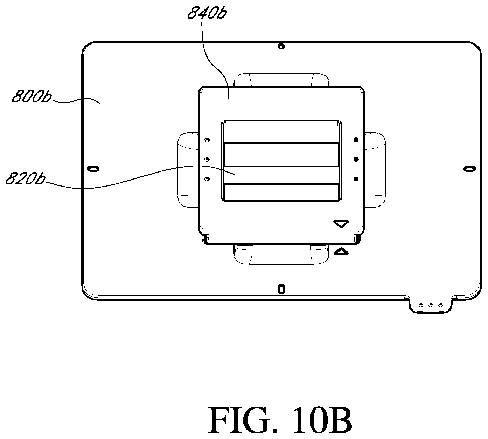

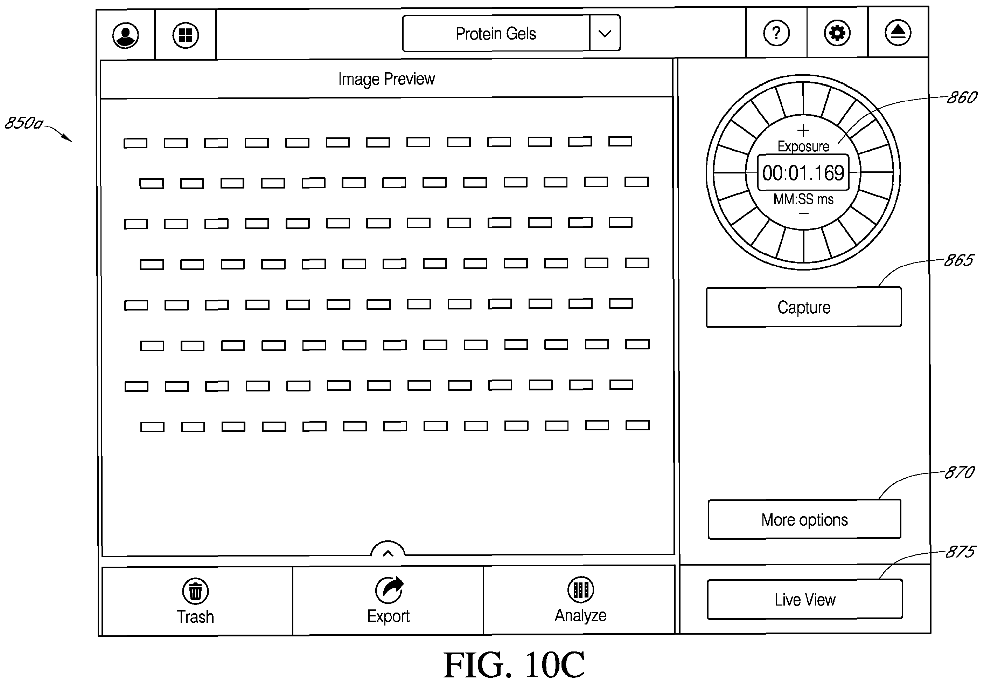

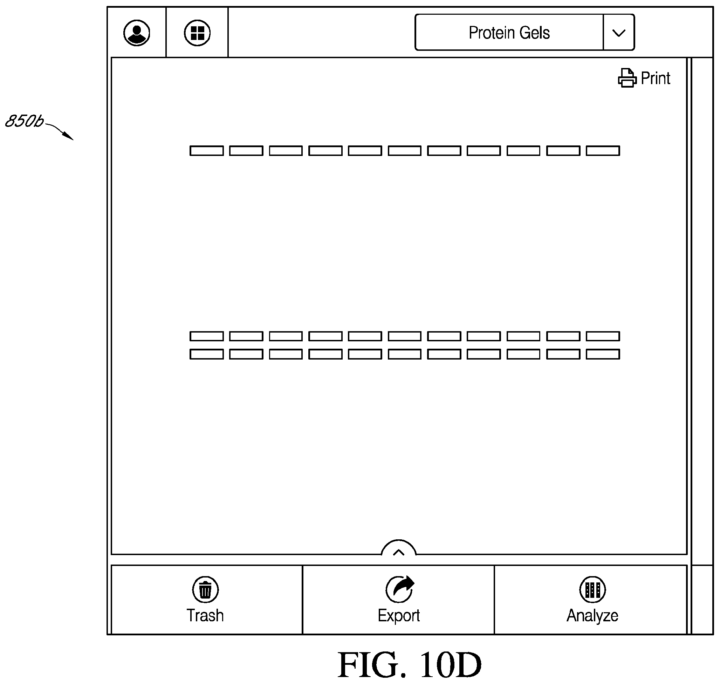

Figures 10A and 10B illustrate frame embodiments 840a/b of different sizes. Each frame 840a/b is laying on a mat 800a/b and holds a gel 820a/b. Frames 840a/b are sized differently, meaning the mat 800a/b and gels 820a/b are sized differently as well. Figure 10C shows a screen 850a showing imaging results of gel 820a of Figure 10A. Figure 10D shows a screen 850b with imaging results of gel 820b of Figure 10B. Screens 850a/b can comprise parts of an imager, such as an output screen. Screens 850a/b could also be displaying screen captures of previous results. Figure 10C illustrates a number of graphical user interface features and commands, which can be implemented in a variety of embodiments. Dial 860 comprises a measurement of a light source. Capture 865 can allow a user to get a screen capture of test results. Button 870 can be used to show more options, or for other commands. Button 875 can be used to end the view or test. A variety of other GUI tools, buttons, commands or prompts can be used. Screen 850a/b could be a touchscreen or could be implemented into a variety of computer systems.

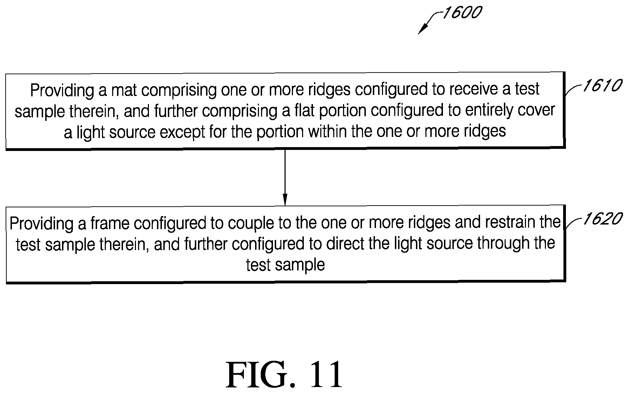

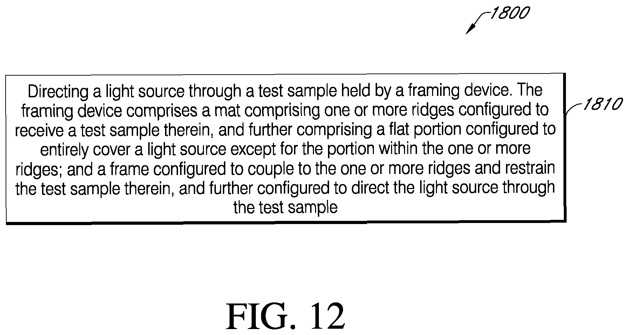

Figures 11 and 12 show possible method embodiments, although not claimed in the appended claims, under the present disclosure for imagers and framing devices.

Figure 11 shows a flow chart of a method 1600 of constructing a framing device for an imager. Step 1610 is providing a mat comprising one or more ridges configured to receive a test sample therein, and further comprising a flat portion configured to entirely cover a light source except for the portion within the one or more ridges. Step 1620 is providing a frame configured to couple to the one or more ridges and restrain the test sample therein, and further configured to direct the light source through the test sample.

Figure 12 shows a flow chart of a method 1800 of using a framing device for an imager. Step 1810 is directing a light source through a test sample held by a framing device. The framing device comprises a mat comprising one or more ridges configured to receive a test sample therein, and further comprising a flat portion configured to entirely cover a light source except for the portion within the one or more ridges; and a frame configured to couple to the one or more ridges and restrain the test sample therein, and further configured to direct the light source through the test sample.

Methods 1600 and 1800 can comprise a variety of alternative or additional steps or characteristics. The frame can be configured to fit within or outside the ridges of the mat, for example. The frame can also be configured to cover portions of a test sample gel. Gels may have writing or other markings about their rim, which can undergo fluorescence or other reaction when exposed to a light source or transilluminator in an imager. The frame can be configured to cover these markings, such as by having extensions or ridges that extend to cover portions of the gel. The mat can comprise markings or physical modifications to help align the mat with a border or other portion of an imager. The frame and mat can comprise a variety of sizes. The mat can further comprise a tab or extension that allows it to be moved or pulled off an imager in an easier fashion. The frame and mat can comprise a variety of materials, such as plastics, rubbers, or other materials. Preferred materials are those that block light effectively and do not fluoresce when exposed to fluorescent sources.

### Abbreviated List of Defined Terms

To assist in understanding the scope and content of this written description and the appended claims, a select few terms are defined directly below. Unless defined otherwise, all technical and scientific terms used herein have the same meaning as commonly understood by one of ordinary skill in the art to which the present disclosure pertains.

The terms "approximately," "about," and "substantially," as used herein, represent an amount or condition close to the specific stated amount or condition that still performs a desired function or achieves a desired result. For example, the terms "approximately," "about," and "substantially" may refer to an amount or condition that deviates by less than 10%, or by less than 5%, or by less than 1%, or by less than 0.1%, or by less than 0.01% from a specifically stated amount or condition.

Various aspects of the present disclosure, including devices, systems, and methods may be illustrated with reference to one or more embodiments or implementations, which are exemplary in nature. As used herein, the term "exemplary" means "serving as an example, instance, or illustration," and should not necessarily be construed as preferred or advantageous over other embodiments disclosed herein. In addition, reference to an "implementation" of the present disclosure or invention includes a specific reference to one or more embodiments thereof, and vice versa, and is intended to provide illustrative examples without limiting the scope of the invention, which is indicated by the appended claims rather than by the following description.

As used in the specification, a word appearing in the singular encompasses its plural counterpart, and a word appearing in the plural encompasses its singular counterpart, unless implicitly or explicitly understood or stated otherwise. Thus, it will be noted that, as used in this specification and the appended claims, the singular forms "a," "an" and "the" include plural referents unless the context clearly dictates otherwise. For example, reference to a singular referent (*e.g.,* "a widget") includes one, two, or more referents unless implicitly or explicitly understood or stated otherwise. Similarly, reference to a plurality of referents should be interpreted as comprising a single referent and/or a plurality of referents unless the content and/or context clearly dictate otherwise. For example, reference to referents in the plural form (*e.g.,* "widgets") does not necessarily require a plurality of such referents. Instead, it will be appreciated that independent of the inferred number of referents, one or more referents are contemplated herein unless stated otherwise.

As used herein, directional terms, such as "top," "bottom," "left," "right," "up," "down," "upper," "lower," "proximal," "distal," "adjacent," and the like are used herein solely to indicate relative directions and are not otherwise intended to limit the scope of the disclosure and/or claimed invention.

### Conclusion

It is understood that for any given component or embodiment described herein, any of the possible candidates or alternatives listed for that component may generally be used individually or in combination with one another, unless implicitly or explicitly understood or stated otherwise. Additionally, it will be understood that any list of such candidates or alternatives is merely illustrative, not limiting, unless implicitly or explicitly understood or stated otherwise.

In addition, unless otherwise indicated, numbers expressing quantities, constituents, distances, or other measurements used in the specification and claims are to be understood as being modified by the term "about," as that term is defined herein. Accordingly, unless indicated to the contrary, the numerical parameters set forth in the specification and attached claims are approximations that may vary depending upon the desired properties sought to be obtained by the subject matter presented herein. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the subject matter presented herein are approximations, the numerical values set forth in the specific examples are reported as precisely as possible. Any numerical values, however, inherently contain certain errors necessarily resulting from the standard deviation found in their respective testing measurements.

It will also be appreciated that systems, devices, products, kits, methods, and/or processes, according to certain embodiments of the present disclosure may include, incorporate, or otherwise comprise properties or features (e.g., components, members, elements, parts, and/or portions) described in other embodiments disclosed and/or described herein. Accordingly, the various features of certain embodiments can be compatible with, combined with, included in, and/or incorporated into other embodiments of the present disclosure. Thus, disclosure of certain features relative to a specific embodiment of the present disclosure should not be construed as limiting application or inclusion of said features to the specific embodiment. Rather, it will be appreciated that other embodiments can also include said features, members, elements, parts, and/or portions without necessarily departing from the scope of the present disclosure.

Moreover, unless a feature is described as requiring another feature in combination therewith, any feature herein may be combined with any other feature of a same or different embodiment disclosed herein. Furthermore, various well-known aspects of illustrative systems, methods, apparatus, and the like are not described herein in particular detail in order to avoid obscuring aspects of the example embodiments. Such aspects are, however, also contemplated herein.

## Claims

1. A contrast tray (100, 1040) for use in an imager, comprising:
one or more light diffusing layers (180) configured to shift at least some of an imaging light ;-and
one or more light filtering layers (140) configured to filter out at least some of the imaging light,
**characterized in that** the one or more light diffusing layers comprises one or more translucent yellow layers.

2. The contrast tray of claim 1, wherein the one or more light filtering layers are configured to upshift at least some of the imaging light.

3. The contrast tray of any of claims 1 or 2, further comprising a frame (120, 1020) configured to couple to the one or more light diffusing layers and the one or more light filtering layers.

4. The contrast tray of any of claims 1 to 3, wherein the one or more light filtering layers comprises one or more translucent orange layers.

5. The contrast tray of claim 1, wherein the contrast tray is configured to receive a test sample between the one or more light diffusing layers and the one or more light filtering layers or alternatively, wherein the contrast tray is configured to receive a test sample on top of the tray.

6. The contrast tray of claim 1, further comprising an adhesive layer (160) bonding the one or more light diffusing layers to the one or more light filtering layers,
and optionally wherein the adhesive layer comprises an adhesive tape.

7. The contrast tray of any of claims 1 to 6, wherein the one or more light diffusing layers comprises a surface treatment comprising at least one of: spray coating; texturing; UV-cured dye.

8. A method (1200) of operating an imager, comprising:
directing an imaging light through a contrast tray holding a sample (1210), the contrast tray as claimed in claim 1, the contrast tray further comprising;
the one or more light diffusing layers further configured to upconvert at least some of the imaging light; and
the one or more light filtering layers further configured to upconvert at least some of the non-filtered light.

9. The method of claim 8, further comprising displaying an output from the one or more light filtering layers to a user.

10. The method of claim 8 or 9, wherein the contrast tray further comprises at least one of:
an adhesive layer coupling the one or more light diffusing layers to the one or more light filtering layers.

11. The method of any of claims 8 to 10, wherein the imaging light comprises a green or blue-green light.

12. The method of any of claims 8 to 11, further comprising placing a test sample on the contrast tray before directing the imaging light, and optionally wherein the test sample comprises a gel or a stained cell-culture plate.

13. The method of any of claims 8 to 10, further comprising placing a test sample between the one or more light diffusing layers and the one or more light filtering layers before directing the imaging light.

14. A method (1400) of constructing a contrast tray, comprising:
providing one or more light diffusing layers (1410) configured to shift at least some of an imaging light, and further configured to upconvert at least some of the imaging light;
providing one or more light filtering layers (1420) configured to filter out at least some of the imaging light, and further configured to upconvert at least some of the non-filtered light; and
coupling the one or more light diffusing layers to the one or more light filtering layers(1430),
**characterized in that** the one or more light diffusing layers comprises one or more translucent yellow layers.

15. The method of claim 14, wherein the coupling comprises using an adhesive,
and optionally also further comprising coupling a filter frame to the one or more light filtering layers.

## Patentansprüche

1. Kontrastboden (100, 1040) zur Verwendung in einem Bildgebungsgerät, umfassend:
eine oder mehrere lichtstreuende Schichten (180), die konfiguriert sind, um mindestens einen Teil eines Bildgebungslichts zu verschieben; und
eine oder mehrere lichtfilternde Schichten (140), die konfiguriert sind, um mindestens einen Teil des Bildgebungslichts heraus filtern,
**dadurch gekennzeichnet, dass** die eine oder mehreren lichtstreuenden Schichten eine oder mehrere durchscheinende gelbe Schichten umfassen.

2. Kontrastboden nach Anspruch 1, wobei die eine oder die mehreren lichtfilternden Schichten konfiguriert sind, um mindestens einen Teil des Bildgebungslichts hochzuverschieben.

3. Kontrastboden nach einem der Ansprüche 1 oder 2, ferner umfassend einen Rahmen (120, 1020), der konfiguriert ist, um die eine oder mehreren lichtstreuenden Schichten und die eine oder mehreren lichtfilternden Schichten zu verbinden.

4. Kontrastboden nach einem der Ansprüche 1 bis 3, wobei die eine oder mehreren lichtfilternden Schichten eine oder mehrere durchscheinende orangefarbene Schichten umfassen.

5. Kontrastboden nach Anspruch 1, wobei der Kontrastboden konfiguriert ist, um eine Testprobe zwischen der einen oder den mehreren lichtstreuenden Schichten und der einen oder den mehreren lichtfilternden Schichten zu empfangen, oder wobei alternativ der Kontrastboden konfiguriert ist, um eine Testprobe oben auf dem Boden zu empfangen.

6. Kontrastboden nach Anspruch 1, ferner umfassend eine Haftschicht (160), die die eine oder mehreren lichtstreuenden Schichten an die eine oder mehreren lichtfilternden Schichten bindet, und wobei gegebenenfalls die Haftschicht ein Klebeband umfasst.

7. Kontrastboden nach einem der Ansprüche 1 bis 6, wobei die eine oder mehreren lichtstreuenden Schichteneine Oberflächenbehandlung umfassen, die mindestens eines der Folgenden umfasst: Sprühbeschichtung; Texturierung; UV-härtender Farbstoff.

8. Verfahren (1200) zum Betreiben einer Bildgebungsvorrichtung, umfassend: Ausrichten eines Bildgebungslichts durch einen Kontrastboden, haltend eine Probe (1210), wobei der Kontrastboden wie in Anspruch 1 beansprucht ist, wobei der Kontrastboden ferner Folgendes umfasst;
die eine oder mehreren lichtstreuenden Schichten, die ferner konfiguriert sind, um mindestens einen Teil des Bildgebungslichts hochzukonvertieren; und
die eine oder mehreren lichtfilternden Schichten, die ferner konfiguriert sind, um mindestens einen Teil des nicht gefilterten Lichts hochzukonvertieren.

9. Verfahren nach Anspruch 8, ferner umfassend das Anzeigen einer Ausgabe der einen oder mehreren lichtfilternden Schichten an einen Benutzer.

10. Verfahren nach Anspruch 8 oder 9, wobei der Kontrastboden weiterhin mindestens eines der Folgenden umfasst:
eine Haftschicht, die die eine oder mehreren lichtstreuenden Schichten mit der einen oder den mehreren lichtfilternden Schichten verbindet.

11. Verfahren nach einem der Ansprüche 8 bis 10, wobei das Bildgebungslicht ein grünes oder blaugrünes Licht umfasst.

12. Verfahren nach einem der Ansprüche 8 bis 11, ferner umfassend das Anordnen einer Testprobe auf dem Kontrastboden vor dem Ausrichten des Bildgebungslichtes,
und wobei die Testprobe gegebenenfalls ein Gel oder eine gefärbte Zellkulturplatte umfasst.

13. Verfahren nach einem der Ansprüche 8 bis 10, ferner umfassend das Anordnen einer Testprobe zwischen der einen oder den mehreren lichtstreuenden Schichten und der einen oder den mehreren lichtfilternden Schichten, bevor das Bildgebungslicht ausgerichtet wird.

14. Verfahren (1400) zum Konstruieren eines Kontrastbodens, umfassend:
Bereitstellen einer oder mehrerer lichtstreuender Schichten (1410), die konfiguriert sind, um mindestens einen Teil eines Bildgebungslichts zu verschieben, und die ferner konfiguriert sind, um mindestens einen Teil des Bildgebungslichts hochzukonvertieren;
Bereitstellen einer oder mehrerer lichtfilternder Schichten (1420), die konfiguriert sind, um mindestens einen Teil eines Bildgebungslichts herauszufiltern, und die ferner konfiguriert sind, um mindestens einen Teil des nicht gefilterten Lichts hochzukonvertieren; und
Verbinden der einen oder mehreren lichtstreuenden Schichten mit der einen oder den mehreren lichtfilternden Schichten (1430),
**dadurch gekennzeichnet, dass** die eine oder mehreren lichtstreuenden Schichten eine oder mehrere durchscheinende gelbe Schichten umfassen.

15. Verfahren nach Anspruch 14, wobei die Verbindung das Verwenden eines Haftmittels umfasst und gegebenenfalls auch ferner das Verbinden eines Filterrahmens mit der einen oder den mehreren lichtfilternden Schichten umfasst.

## Revendications

1. Un plateau de contraste (100, 1040) destiné à être utilisé dans un imageur, comprenant :
une ou plusieurs couches de diffusion de la lumière (180) conçues pour dévier au moins une partie de la lumière d'imagerie ; et
une ou plusieurs couches de filtrage de la lumière (140) conçues pour filtrer au moins une partie de la lumière d'imagerie,
**caractérisé en ce que** la ou les couches de diffusion de la lumière comprennent une ou plusieurs couches jaunes translucides.

2. Plateau de contraste selon la revendication 1, dans lequel la ou les couches de filtrage de la lumière sont conçues pour convertir vers des longueurs d'onde plus élevées au moins une partie de la lumière d'imagerie.

3. Plateau de contraste selon l'une quelconque des revendications 1 ou 2, comprenant en outre un cadre (120, 1020) conçu pour être associé à la ou aux couches de diffusion de la lumière et à la ou aux couches de filtrage de la lumière.

4. Plateau de contraste selon l'une quelconque des revendications 1 à 3, dans lequel la ou les couches de filtrage de la lumière comprennent une ou plusieurs couches orange translucides.

5. Plateau de contraste selon la revendication 1, dans lequel le plateau de contraste est conçu pour recevoir un échantillon à analyser entre la ou les couches de diffusion de la lumière et la ou les couches de filtrage de la lumière, ou bien dans lequel le plateau de contraste est conçu pour recevoir un échantillon à analyser sur le dessus du plateau.

6. Plateau de contraste selon la revendication 1, comprenant en outre une couche adhésive (160) associant la ou les couches de diffusion de la lumière à la ou aux couches de filtrage de la lumière,
et, de manière facultative, dans lequel la couche adhésive comprend un ruban adhésif.

7. Plateau de contraste selon l'une quelconque
des revendications 1 à 6,
dans lequel la ou les couches de diffusion de la
lumière
comprennent un traitement de surface comprenant au moins l'une des techniques suivantes : revêtement par pulvérisation ; texturation ; colorant réticulé par UV.

8. Procédé (1200) de fonctionnement d'un imageur, impliquant ce qui suit :
diriger un faisceau lumineux d'imagerie à travers un plateau de contraste contenant un échantillon (1210), le plateau de contraste,
tel que défini dans la revendication 1, comprenant en outre :
la ou les couches de diffusion de la lumière, qui sont en outre conçues pour convertir vers des longueurs d'onde plus élevées au moins une partie de la lumière d'imagerie ; et
la ou les couches de filtrage de la lumière, qui sont en outre conçues pour convertir vers des longueurs d'onde plus élevées au moins une partie de la lumière non filtrée.

9. Procédé selon la revendication 8,
comprenant en outre la présentation à un utilisateur d'une sortie
provenant de la ou des couches de filtrage de la lumière.

10. Procédé selon la revendication 8 ou 9,
dans lequel le plateau de contraste comprend en outre au moins l'un des éléments suivants :
une couche adhésive associant la ou les couches de diffusion de la lumière à la ou aux couches de filtrage de la lumière.

11. Procédé selon l'une quelconque des revendications 8 à 10,
dans lequel la lumière d'imagerie est une lumière verte ou
bleu-vert.

12. Procédé selon l'une quelconque des revendications 8 à 11,
comprenant en outre le fait de placer un échantillon à analyser sur le
plateau de contraste avant de diriger la lumière d'imagerie,
et dans lequel, de manière facultative, l'échantillon à analyser comprend un gel ou une plaque de culture cellulaire colorée.

13. Procédé selon l'une quelconque des revendications 8 à 10, comprenant en outre le fait de
placer un échantillon à analyser entre
la ou les couches de diffusion de la lumière et la ou les couches de filtrage de la lumière avant de diriger la lumière d'imagerie.

14. Procédé (1400) de fabrication d'un plateau de contraste, comprenant :
une ou plusieurs couches de diffusion de la lumière (1410) conçues pour dévier au moins une partie de la lumière d'imagerie, et conçues en outre pour convertir vers des longueurs d'onde plus élevées au moins une partie de la lumière d'imagerie ;
une ou plusieurs couches de filtrage de la lumière (1420) conçues pour filtrer au moins une partie de la lumière d'imagerie, et conçues en outre pour convertir vers des longueurs d'onde plus élevées au moins une partie de la lumière non filtrée ; et
l'association de la ou des couches de diffusion de la lumière à la ou aux couches de filtrage de la lumière (1430),
**caractérisé en ce que** la ou les couches de diffusion de la lumière comprennent une ou plusieurs couches jaunes translucides.

15. Procédé selon la revendication 14, dans lequel l'association est réalisée au moyen d'un
adhésif,
et comprenant en outre, de manière facultative, l'association d'un cadre de filtre à la ou aux couches de filtrage de la lumière.
